# FASCICULE DE BREVET EUROPEEN

(11) **EP 3 601 981 B1**
(45) Date de publication et mention de la délivrance du brevet: **26.05.2021**
(21) Numéro de dépôt: 18722098.3
(22) Date de dépôt: 28.03.2018
(51) Int. Cl.: G01M 1/10, G01M 7/06

(54) **DISPOSITIF ET PROCEDE DE MISE EN MOUVEMENT D'UN OBJET**
VORRICHTUNG UND VERFAHREN ZUM EINSTELLEN EINES OBJEKTES IN BEWEGUNG
DEVICE AND METHOD FOR SETTING AN OBJECT IN MOTION

(30) Priorité: 30.03.2017 FR 1752729
(43) Date de publication de la demande: 05.02.2020
(73) Titulaire: Philoptere, 78860 Saint Nom La Breteche (FR)
(72) Inventeur: PERRIER, Philippe, 78860 Saint Nom La Breteche (FR)
(74) Mandataire: Plasseraud IP
(86) Numéro de dépôt international: PCT/FR2018/050759
(87) Numéro de publication internationale: WO 2018/178571

(56) Documents cités:
- CN-A- 101 055 221
- CN-A- 101 793 582
- US-A- 4 875 374
- US-A1- 2011 308 296
- US-A1- 2014 302 462

## Description

### DOMAINE TECHNIQUE

La présente se réfère aux dispositifs et procédés de mise en mouvement d'un objet en utilisant une tourelle hexapode, et plus particulièrement pour la détermination de caractéristiques inertielles de l'objet.

### ETAT DE L'ART

Lorsqu'un objet est soumis à des mouvements complexes, il est souvent désirable de connaître ses caractéristiques inertielles (masse, position de son centre de gravité, matrice d'inertie) afin de maîtriser son comportement. La connaissance des caractéristiques inertielles peut être particulièrement souhaitée, par exemple, dans le domaine des transports spatiaux, aéronautiques, terrestres ou maritimes ou pour certains équipements sportifs tels que les clubs de golf.

La détermination de la masse est traditionnellement réalisée par pesage. En ce qui concerne la position du centre de gravité, on peut trouver la projection verticale du centre de gravité au sol en utilisant, par exemple, trois balances. Pour la hauteur du centre de gravité, on place généralement l'objet à plusieurs inclinaisons, ce qui peut devenir difficilement réalisable pour un objet encombrant et/ou lourd.

La matrice d'inertie est une matrice symétrique 3x3 dont chaque colonne représente les trois composantes du moment des efforts qu'il faut appliquer à l'objet pour obtenir une accélération unitaire de rotation autour de chaque axe de référence. Pour tout objet solide, il existe trois axes propres d'inertie, orthogonaux entre eux, définis comme les axes de rotation tels que le moment à appliquer est aligné avec l'axe. Couramment, on mesure la matrice d'inertie en plaçant l'objet sur un pendule de torsion suivant un axe aussi proche que possible de ses axes propres d'inertie, et en mesurant la période d'oscillation. Connaissant la raideur du pendule, on peut en déduire l'inertie de rotation suivant l'axe d'essai. Il existe également une technique analogue avec un pendule à deux fils. Cependant, cette méthode n'est souvent pas réalisable de façon pratique dans le cas d'objets encombrants. Il existe aussi des dispositifs comportant un plateau tournant sur lequel on place l'objet, et dont les paramètres inertiels sont mesurés suivant l'axe de rotation du plateau. Cependant, la matrice d'inertie complète nécessite de répéter cette opération selon trois axes de rotation indépendants, ce qui peut s'avérer rédhibitoire pour certains objets lourds, encombrants ou fragiles.

Afin de ne pas avoir à déplacer l'objet pour les mesures, certains procédés de mesure, comme celui décrit dans CN101793582, utilisent une tourelle hexapode, aussi appelée plateforme Stewart. La tourelle hexapode est constituée d'une base fixe, d'un plateau mobile supportant l'objet dont les caractéristiques inertielles sont à mesurer, et de six supports connectant la base fixe au plateau mobile. Les six supports constituent une liaison isostatique entre la base et le plateau. En modifiant les longueurs des supports par des vérins actionnés par un moteur qui leur est propre, on peut imprimer au plateau des mouvements tels que l'objet peut être mis en rotation selon plusieurs axes afin de mesurer ses caractéristiques inertielles. Cependant, cette technique nécessite une synchronisation précise des commandes des six vérins pour assurer des mouvements de rotation successifs autours des trois axes souhaités. De plus, chaque vérin supporte un effort permanent moyen de l'ordre de 20 à 30% du poids de l'objet, ce qui peut rendre difficile un contrôle précis en position et vitesse.

D'autres références divulguent des plateformes à 6 degrés de libertés. Par exemple, CN101055221 divulgue ne table vibrante à mécanisme parallèle multidimensionnel qui comprend un mécanisme parallèle à plusieurs libertés composé de 3 à 6 chaînes de ramification, une plate-forme mobile et une plate-forme statique. Chaque chaîne de ramification peut sélectionner une ou plusieurs paires de mouvements.

US2011/308296 divulgue un agitateur pour permettre le test de gyroscopes et / ou d'autres appareils pour des performances sous des mouvements réalistes à six degrés de libertés. L'agitateur peut être mis en œuvre sous la forme d'un hexapode, comprenant une plaque et six ensembles d'entretoises contrôlables en temps réel et individuellement qui sont capables de s'étendre et de se contracter linéairement. Les ensembles d'entretoises peuvent comprendre des actionneurs électromagnétiques linéaires et des capteurs sans contact de haute précision pour détecter l'extension / contraction des ensembles d'entretoises le long de leur course.

US2014/302462 divulgue un système de simulation de mouvement à six degrés de liberté comprend des actionneurs ayant une boîte de vitesses planétaire engagée avec et entraînée par un servomoteur engagé avec une manivelle. Une tige de connexion est en prise avec la manivelle de chaque actionneur et en prise avec une plate-forme configurée pour se fixer à un véhicule. Un système de commande peut fonctionner avec chaque servomoteur électrique de chaque actionneur pour fournir une commande pour fournir un mouvement simulé à la plaque supérieure. Les données de contrôle sont envoyées aux servomoteurs en utilisant un taux d'envoi et de réception de données en msec, avec un traitement interne dans la plage de nano-seconde.

US4875374 divulgue une plate-forme de test de vibration à axes multiples comprenant une pluralité de bras d'actionneur connectés à des arbres d'entraînement respectifs avec des rotules excentriques à leurs premières extrémités et à leurs extrémités opposées à la surface inférieure et aux parois latérales de la plateforme de test avec des rotules concentriques. L'excentricité des accouplements à rotule excentrique correspond à l'amplitude de vibration de la plate-forme d'essai le long d'un axe de vibration respectif. Les accouplements à rotule à chaque extrémité des bras de l'actionneur éliminent le couplage croisé du mouvement entre les axes de vibration lorsque la plate-forme d'essai vibre simultanément dans plus d'un axe.

### RESUME

Il est proposé un dispositif de mise en mouvement d'un objet, le dispositif comprenant : une base et un plateau adapté à recevoir l'objet ; six supports ayant chacun une extrémité supérieure connectée au plateau et une extrémité inférieure connectée à la base, l'extrémité supérieure et l'extrémité inférieure de chaque support ayant de façon combinée au moins cinq degrés de liberté ; et un dispositif d'actionnement connecté à au moins trois des supports, le dispositif d'actionnement étant adapté pour imprimer des mouvements périodiques prédéfinis auxdits au moins trois des six supports, ces trois supports étant dits supports commandés, imprimant ainsi un mouvement périodique au plateau par rapport à la base selon au moins trois degrés de libertés, ledit mouvement périodique du plateau est composé d'au moins trois mouvements élémentaires périodiques définissant chacun un degré de liberté du mouvement du plateau, chacun desdits au moins trois mouvements élémentaires périodiques a une période, dite période élémentaire, différente les unes des autres, les périodes élémentaires étant des sous-multiples de la période du mouvement périodique du plateau, les déplacements du plateau selon chacun des mouvements élémentaires périodiques étant algébriquement indépendants les uns des autres.

Le dispositif ci-dessus peut comporter une ou plusieurs des caractéristiques suivantes prises seules ou en combinaison:
-
- le rapport entre la période du plateau et la plus grande des périodes élémentaires est inférieur ou égal à 10.
- les six supports sont des bielles ; et le dispositif d'actionnement comprend un dispositif d'entrainement connectant mécaniquement lesdits supports commandés, le dispositif d'entrainement étant commandé par un unique actionneur.
- le dispositif d'entrainement inclut : une roue d'engrenage centrale adaptée à être mise en rotation par l'actionneur, et au moins trois roues d'engrenage périphériques engrenées sur la roue d'engrenage centrale, et lesdits au moins trois supports commandés ont leur extrémité inférieure connectée respectivement de façon excentrique à chacune desdites au moins trois roues d'engrenage périphériques.
- le dispositif d'entrainement inclut : une roue d'engrenage centrale adaptée à être mise en rotation par l'actionneur, trois roues d'engrenage intermédiaires engrenées sur la roue d'engrenage centrale, six roues d'engrenage périphériques engrenées par groupe de deux sur chacune des trois roues d'engrenage intermédiaires, lesdits au moins trois supports commandés sont six supports commandés, et les six supports commandés ont leur extrémité inférieure connectée de façon excentrique à chacune desdites roues d'engrenage périphériques respectivement.
- les six roues d'engrenage périphériques sont groupées par paires de même diamètre, les diamètres des roues d'engrenage périphériques de chaque paire étant différents d'une paire à l'autre.
- les roues d'engrenage périphériques de même diamètre ont chacune un centre, les centres formant les sommets d'un hexagone, et les roues d'engrenage périphériques de même diamètre sont disposées suivant des sommets opposés de l'hexagone qu'elles constituent.
- les diamètres deux à deux des paires de roues d'engrenage périphériques de même diamètre sont proportionnels à trois nombres entiers premiers entre eux.
- les diamètres deux à deux des trois paires de roues d'engrenage périphériques de même diamètre sont respectivement proportionnels à 4, 5 et 6, ou à 10, 12 et 15.
- les bielles connectées à des roues d'engrenage périphériques d'une même paire de même diamètre sont en opposition de phase.
- comprenant de plus : au moins trois capteurs d'efforts longitudinaux associés à au moins trois des six supports; et une unité centrale connectée au dispositif d'actionnement et auxdits au moins trois capteurs d'efforts longitudinaux, l'unité centrale étant adaptée à collecter des informations d'effort desdits au moins trois capteurs d'efforts longitudinaux.
- comprenant de plus un capteur de position adapté pour détecter le passage de la roue d'engrenage centrale par au moins trois positions prédéfinies, ledit capteur de position communiquant avec l'unité centrale pour en déduire une vitesse de la roue d'engrenage centrale au passage par chacune desdites au moins trois positions prédéfinies.

Il est aussi proposé un procédé de mise en mouvement d'un objet utilisant le dispositif ci-dessus proposé, et comprenant les étapes suivantes : entrainer le dispositif par ledit dispositif d'actionnement de manière à imprimer un mouvement périodique au plateau selon lesdits au moins trois degrés de libertés..

Le procédé ci-dessus peut comporter une ou plusieurs des caractéristiques suivantes prises seules ou en combinaison:
- l'étape d'entrainement du dispositif comprend :
   - entrainer le dispositif par ledit dispositif d'actionnement pour passer par chaque position d'un ensemble prédéfini de positions du plateau à au moins une première vitesse et une deuxième vitesse, ainsi réalisant au moins un premier et un deuxième cycle de mesures, l'ensemble prédéfini de positions comportant au moins trois positions pour lesquelles les mouvements instantanés du plateau à ces positions sont algébriquement indépendants entre eux ;
   - collecter par l'unité centrale, les informations d'effort pour chaque position de l'ensemble prédéfini de positions du plateau lors de l'entrainement auxdites au moins première vitesse et deuxième vitesse ; et
   - déterminer, par l'unité centrale, au moins une caractéristique d'inertie à partir des mouvements du plateau et des informations d'effort correspondant à ces mouvements.
- dans lequel l'unité centrale pour chacune des au moins première et deuxième vitesses, effectue une moyenne des informations d'effort de l'ensemble prédéfini de positions, afin de déterminer ladite au moins une caractéristique d'inertie.
- l'unité centrale, pour chacune desdites au moins première et deuxième vitesses, collecte des données du capteur de position de la roue d'engrenage centrale pour chaque position de l'ensemble prédéfini de positions du plateau, et l'unité centrale fait la moyenne des données du capteur de position pour en déduire une vitesse réelle moyenne de la roue d'engrenage centrale pour chacun desdits au moins premier et deuxième cycles de mesures.
- les roues d'engrenage périphériques de même diamètre sont entrainées en opposition de phase pour chacun des premier et deuxième cycles de mesures.
- l'étape de détermination d'au moins une caractéristique d'inertie des données comprend une extraction par filtre de Fourier d'une valeur moyenne et des composantes de chaque effort sur les fréquences fondamentales des mouvements élémentaires périodiques pour chacun desdits premier et deuxième cycles de mesures.

D'autres caractéristiques et avantages apparaîtront au cours de la description suivante d'une de ses formes de réalisation, donnée à titre d'exemple non limitatif, en regard des dessins joints.

### FIGURES

Sur les dessins :
- la figure 1 est une vue schématique de perspective d'une tourelle hexapode ayant un dispositif d'entrainement selon un mode de réalisation,
- la figure 2 est une vue schématique plane du dessus d'un dispositif d'entrainement selon un autre mode de réalisation pour la tourelle hexapode de la figure 1,
- la figure 3 est une vue schématique de perspective d'une tourelle hexapode selon encore un autre mode de réalisation, et
- la figure 4 est un logigramme illustrant un procédé d'utilisation d'une tourelle hexapode telle que celles des figures 1 à 3.

Sur les différentes figures, les mêmes références désignent des éléments identiques ou similaires.

### DESCRIPTION DETAILLEE

Un dispositif de mise en mouvement d'un objet par une tourelle hexapode va être décrit. Dans un mode de réalisation préféré, le dispositif est utilisé pour calculer les caractéristiques inertielles de l'objet. Cependant, d'autres applications sont possibles. Ces applications pourraient ou pas inclure des calculs de caractéristiques de l'objet en mouvement. Le dispositif décrit imprime un mouvement périodique prédéfini à l'objet balayant trois ou plus degrés de libertés de l'espace des déplacements. Le choix du nombre de degrés de liberté du mouvement peut être en accord avec une application choisie. Par exemple, pour le calcul d'une matrice d'inertie, un mouvement à trois degrés de libertés seulement pourrait être souhaitable. Dans un autre exemple, pour mélanger des produits contenus dans l'objet, un mouvement à six degrés de libertés pourrait être souhaitable. Un procédé pour mettre l'objet en mouvement en utilisant le dispositif sera aussi décrit.

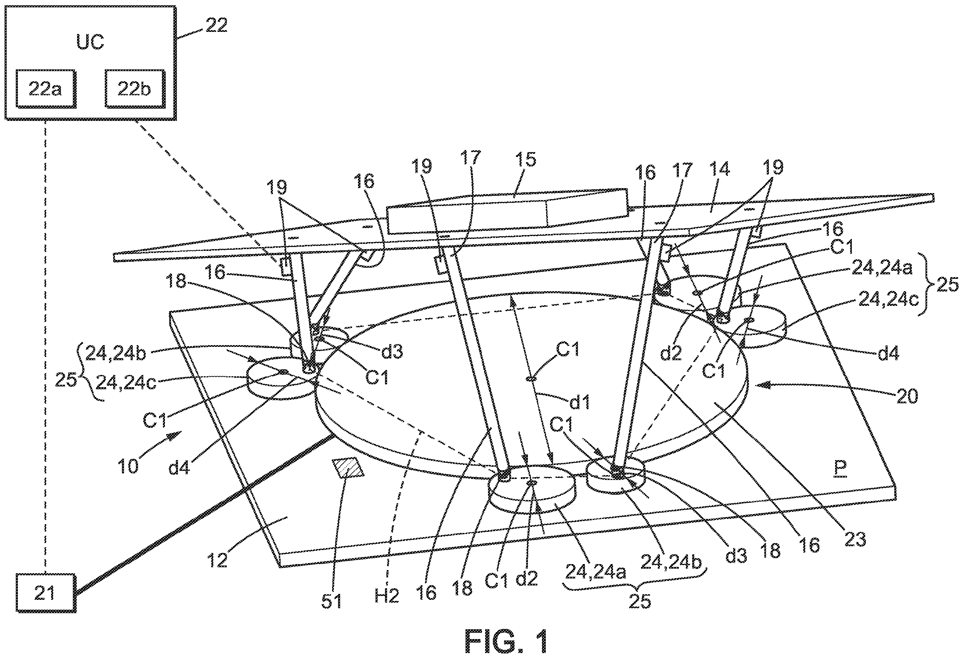

En référence à la figure 1, une tourelle hexapode 10 inclut une base 12, un plateau 14 pour recevoir un objet 15, et six supports 16 liants la base 12 au plateau 14. La tourelle hexapode 10 a préférentiellement un diamètre de l'ordre de grandeur de l'objet 15. Les supports 16 sont, dans ce mode de réalisation, des bielles. Les bielles 16 ont leurs extrémités supérieures 17, ou têtes, connectées au plateau 14 et leurs extrémités inférieures 18, ou pieds, connectées à la base 12. Les extrémités inférieures 18 d'au moins trois bielles 16 sont connectées à la base 12 par l'intermédiaire d'un dispositif d'actionnement pour la mise en mouvement du plateau 14. Les bielles 16 mises en mouvement par le dispositif d'actionnement sont dites bielles ou supports commandé(e)s. Les supports commandés sont connectés de façon mécanique entre eux par le dispositif d'entrainement. Dans un autre mode de réalisation, décrit plus bas, le dispositif d'entrainement ne lie pas les supports commandés entre eux de façon mécanique, mais via une unité centrale.

Les connections aux extrémités supérieures 17 et inférieures 18 sont choisies telles que pour chaque bielle 16 ces connections ont de façon combinée au moins cinq degrés de liberté. Les connections aux extrémités supérieures 17 et inférieures 18 des bielles 16 sont de type rotule ou cardan. Les bielles 16 sont des axes de connexion qui ne varient pas en longueur, comme il serait le cas pour des vérins, mais dont leur mouvement dans l'espace induit des mouvements du plateau 14. Ainsi, les connections de type rotule ou cardan permettent le mouvement des bielles 16 en assurant que celles-ci ne transmettent que des efforts alignés avec leur axe.

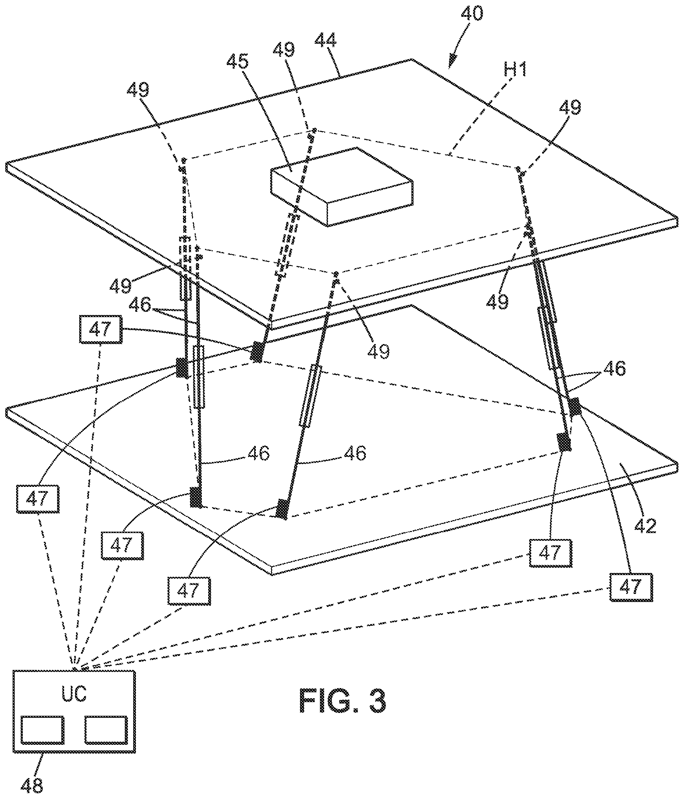

La répartition des bielles 16 par rapport au plateau 14 et à la base 12 forme deux hexagones. Les extrémités supérieures 17 définissent généralement un hexagone H1 (illustré à la figure 3 pour un autre mode de réalisation de la tourelle hexapode 10). L'hexagone H1 est, dans un mode de réalisation, non-régulier. Les extrémités inférieures 18 définissent généralement un hexagone H2 (montré en pointillés). L'hexagone H2 est, dans un mode de réalisation, non-régulier.

La base 12 est fixe, au moins pendant l'utilisation du dispositif 10. Le dispositif d'actionnement comprend, dans ce mode de réalisation, un dispositif d'entrainement 20 et un unique actionneur 21. Le dispositif d'entrainement 20 est solidaire de la base 12. Dans un mode de réalisation, l'actionneur 21 est un moteur électrique. Le dispositif d'entrainement 20 est une liaison mécanique entre les bielles commandées qui imprime un mouvement spatialement périodique aux extrémités inférieures 18 des bielles commandées 16. Le mouvement spatialement périodique des bielles 16 imprime ainsi un mouvement périodique au plateau 14 par rapport à la base 12. Bien qu'un seul moteur 21 met en mouvement le dispositif d'entrainement 20 des bielles 16, il est envisagé que plusieurs moteurs pourraient entraîner les bielles 16, par exemple, par groupes de bielles 16. Bien que ce mode de réalisation montre l'actionnement des bielles 16 par leur extrémité inférieure 18, il se pourrait que les extrémités supérieures 17 ou bien une autre partie des bielles 16 puissent être mises en mouvement par le dispositif d'entrainement 20. De plus, il se pourrait que 3, 4, 5 ou les 6 bielles 16 soient des supports commandés.

Dans un mode de réalisation montré à la figure 1, le dispositif d'entrainement 20 inclut une roue d'engrenage centrale 23 et six roues d'engrenage périphériques 24 engrenant avec la roue d'engrenage centrale 23. Chaque roue d'engrenage périphérique 24 reçoit une extrémité inférieure 18 des bielles 16 (c'est-à-dire une bielle 16 par roue d'engrenage périphérique 24 et inversement). Chaque bielle 16 est orientée préférentiellement de façon à s'étendre selon une direction sensiblement éloignée d'un axe de rotation de la roue d'engrenage périphérique 24 sur laquelle elle est connectée. Les extrémités inférieures 18 des bielles 16 sont connectées de façon excentrique à la roue d'engrenage périphérique 24 qui lui est associée (c'est-à-dire, une connexion en dehors du centre de chaque roue périphérique 24). Bien que le mode de réalisation montré à la figure 1 montre les six bielles 16 mises en mouvement par les roues d'engrenage périphériques 24, il est envisagé que 3, 2 ou 1 de ces bielles 16 pourraient avoir leurs extrémités inférieures 18 liées à la base 12 directement (c'est-à-dire sans mouvement de rotation par les roues d'engrenage périphériques 24), par exemple par des liaisons rotule ou des liaisons à joints de cardan. Ainsi, le dispositif d'entrainement 20 pourrait n'avoir que 3, 4 ou 5 roues d'engrenage périphériques 24.

La roue d'engrenage centrale 23 est connectée au moteur 21, de sorte que l'entrainement de la roue d'engrenage centrale 23 mette en mouvement les roues d'engrenage périphériques 24 et donc les bielles 16. Grace à cette configuration, pour chaque position de la roue d'engrenage centrale 23, il existe une position unique du plateau 14, et un seul moteur 21 peut suffire pour entrainer le plateau 14 en mouvement.

Dans le mode de réalisation de la figure 1, les roues d'engrenage périphériques 24 sont globalement réparties autour de la roue d'engrenage centrale 23 par groupe de deux roues 25. Les roues d'engrenage périphériques 24 sont disposées dans un même plan P que celui de la roue d'engrenage centrale 23. Cependant il est envisagé que les roues d'engrenage périphériques 24 pourraient être disposées dans un plan différent. Par exemple, les roues d'engrenage périphériques 24 pourraient être disposées dans un plan perpendiculaire au plan P de la roue d'engrenage centrale 23, ou bien tel que les axes de rotation des roues périphériques soient sensiblement différents de la direction moyenne de la bielle 16 qui leur est associée. Les roues d'engrenage périphériques 24 pourraient aussi être reparties de façon diverse autour de la roue d'engrenage centrale 23.

La roue d'engrenage centrale 23 a un diamètre d1 supérieur aux diamètres des roues d'engrenage périphériques 24. Il se pourrait, cependant, que le diamètre d1 de la roue d'engrenage centrale 23 soit inférieur à certains ou tous les diamètres des roues d'engrenage périphériques 24. Certaines roues d'engrenage périphériques 24 pourraient avoir un diamètre commun. Par exemple, tel que montré à la figure 1, les roues d'engrenage périphériques 24 sont groupées en trois paires de roues 24a, 24b, 24c, les roues de chaque paire 24a, 24b, 24c ayant un diamètre respectif d2, d3, d4 qui est propre à cette paire. Dans le mode de réalisation montré à la figure 1, les roues d'engrenage périphériques de chaque paire 24a, 24b, 24c (qui ont le même diamètre) sont disposées telles que leurs centres C2 forment les sommets d'un hexagone non-régulier. Dans ce mode de réalisation, les centres des roues d'engrenage périphériques d'une même paire 24a, 24b, 24c de même diamètre sont des sommets opposés de l'hexagone. Cependant, il est envisagé que les roues d'engrenage périphériques 24 de même diamètre pourraient ne pas être disposées telles que leur centres soient des sommets opposés de l'hexagone qu'ils forment. Par exemple, les roues de même diamètre pourraient être adjacentes. Bien que les roues d'engrenage périphériques 24 soient illustrées dans ce mode de réalisation comme étant groupables par paires de même diamètre, il se pourrait aussi que tous les diamètres des roues d'engrenage périphériques 24 soient différents. Il se pourrait aussi que les roues d'engrenage périphériques 24 ne soient pas groupables par paire de même diamètre.

Le dispositif d'entrainement 20 et la connexion excentrique des bielles 16 sont choisis de sorte que les bielles commandées impriment au plateau 14 des mouvements périodiques prédéfinis selon au moins trois degrés de liberté. Un mouvement périodique est selon au moins trois degrés de liberté si, au cours d'une période, il existe au moins trois positions pour lesquelles les mouvements instantanés du plateau à ces positions sont indépendants (i.e. algébriquement indépendant) entre eux. Un mouvement instantané est caractérisé par la combinaison instantanée d'une translation et d'une rotation. Dans certains cas, le mouvement instantané est une simple rotation, dans d'autres cas une simple translation, ou encore une combinaison d'une translation et d'une rotation. Un ensemble de mouvements instantanés est dit indépendant si aucun des couples translation/rotation associés ne peut être exprimé comme une combinaison linéaire des autres. Par exemple, trois mouvements instantanés sont indépendants si les trois axes instantanés de rotation associés ne sont pas coplanaires ou si les trois directions instantanées de translation ne sont pas coplanaires.

On peut obtenir un mouvement périodique selon au moins trois degrés de liberté en combinant trois mouvements élémentaires périodiques à un seul degré de liberté selon trois périodes différentes, à condition que les trois mouvements élémentaires périodiques correspondent à des déplacements indépendants entre eux. Lorsque les périodes des trois mouvements élémentaires périodiques, dites périodes élémentaires, sont des sous-multiples de la période du mouvement d'ensemble, la combinaison des trois mouvements élémentaires périodiques constitue un mouvement périodique. Dans le cas d'une configuration de type hexapode, tout déplacement commandé d'une seule des têtes de support, les cinq autres liaisons gardant une longueur constante, produit un mouvement à un seul degré de liberté. De même toute combinaison de déplacements commandés de deux ou plusieurs têtes de supports, les autres supports gardant une longueur constante, ne produit un déplacement qu'à un seul degré de liberté si les déplacements commandés sont proportionnels entre eux. De même, si, dans un cas particulier de réalisation, deux pieds de bielles sont montés sur des roues excentriques animées de mouvements de même période en phase ou en opposition de phase, le mouvement du plateau résultant n'a qu'un seul degré de liberté. A l'inverse, si les mouvements des roues ne sont pas en phase ou en opposition de phase, en particulier s'ils sont en quadrature de phase ou selon des périodes différentes, on obtient un mouvement du plateau à deux degrés de liberté.

Ainsi, le mouvement périodique du plateau est composé d'au moins trois mouvements élémentaires périodiques définissant chacun un degré de liberté du mouvement du plateau, i.e. les déplacements du plateau selon chacun desdits au moins mouvements élémentaires périodiques sont algébriquement indépendants les uns des autres. Des mouvements sont algébriquement indépendants entre eux lorsque chaque mouvement pris en isolation n'est pas une combinaison linéaire des autres mouvements pris eux aussi en isolation. Du fait même de la liaison isostatique que constitue une tourelle hexapode, le déplacement du plateau 14 induit par le mouvement d'une des bielles commandées prise en isolation (i.e. la composante du mouvement d'une seule des bielles 16 seulement est prise en compte, les autres étant considérées fixes) n'est pas une combinaison linéaire du déplacement du plateau 14 induit par chacune des autres bielles commandées 16 prises en isolation. Cependant, si l'on déplace deux ou plusieurs bielles 16 de façon synchronisée, il est possible de créer un mouvement à un seul degré de liberté. C'est en particulier le cas si les bielles synchronisées ont la même période et sont en phase ou en opposition de phase. Il y a autant de mouvements algébriquement indépendants sélectionnés que de degrés de libertés désirés du mouvement (3, 4, 5 ou 6). Dans un mode de réalisation, avoir un mouvement périodique de l'objet 15 selon au moins trois degrés de liberté comportant au moins trois axes de rotation indépendants est suffisant pour la détermination des caractéristiques inertielles de l'objet 15, comme il sera décrit en plus de détails ci-dessous. De plus, les périodes élémentaires sont différentes entre elles et sont des sous-multiples de la période du mouvement périodique du plateau. Une façon de réaliser, par exemple, trois mouvements algébriquement indépendants entre eux est, par exemple, en ayant au moins trois roues d'engrenage périphériques 24 entrainant les bielles 16 en rotation de diamètres différents. Une façon de réaliser six mouvements algébriquement indépendants pourrait être d'avoir les roues d'engrenage périphériques 24 groupées par paires de même diamètre, les trois paires ayant des diamètres différents, et les roues de chaque paire étant placées en quadrature de phase l'une par rapport à l'autre c'est-à-dire que l'une des bielles est à sa position moyenne lorsqu'une autre est à une position extrémale. Lorsque les roues d'engrenage périphériques 24 ont des diamètres différents, le plateau 14 est alors animé d'un mouvement dont la période est le plus petit commun multiple des périodes de rotation des roues d'engrenage périphériques 24 supportant les bielles 16.

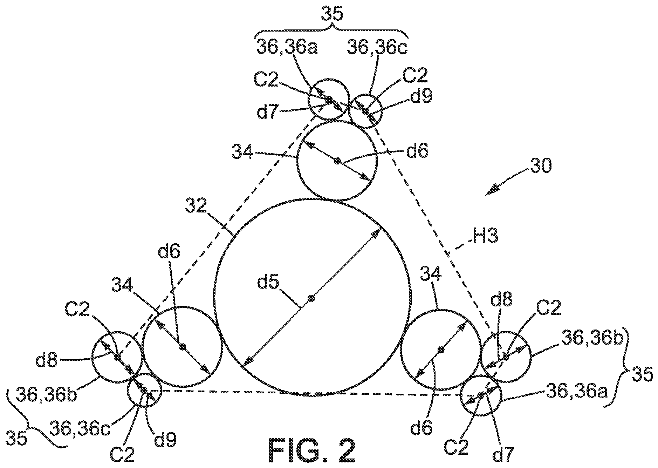

En se référant à la figure 2, dans un autre mode de réalisation, un dispositif d'entrainement 30 des bielles commandées 16 est composé d'une roue d'engrenage centrale 32 entrainable par le moteur 21, et de trois roues d'engrenage intermédiaires 34 engrenées sur la roue d'engrenage centrale 32. Le dispositif d'entrainement 30 et la connexion excentrique des bielles 16 au dispositif d'entrainement 30 impriment au plateau 14 un mouvement périodique selon au moins trois degrés de liberté, de façon similaire au dispositif d'entrainement 30, décrit ci-dessus.

Six roues d'engrenage périphériques 36 engrènent avec les roues d'engrenage intermédiaires 34 par groupe de deux 35. Ainsi, chacune des trois roues d'engrenage intermédiaires 34 est engrenée d'une part avec la roue d'engrenage centrale 32, et d'autre part avec un groupe 35 de deux des roues d'engrenage périphériques 36. La roue d'engrenage centrale 32 a un diamètre d5 de préférence supérieur aux diamètres d6 des roues d'engrenage intermédiaires 34. Les roues d'engrenage intermédiaires 34 peuvent avoir toutes le même diamètre d6 (comme montré à la figure 2), ou bien avoir des diamètres différents. Les roues d'engrenage intermédiaires 34 ont, dans ce mode de réalisation, un diamètre supérieur aux diamètres des roues d'engrenage périphériques 36. Il se pourrait, cependant, que le diamètre de la roue d'engrenage centrale 32 soit inférieur à certains ou tous les diamètres des roues d'engrenage intermédiaires 34 et/ou des périphériques 36. De même, il se pourrait que le diamètre de certaines ou toutes les roues d'engrenage intermédiaires 34 soit inférieur à certains ou tous les diamètres des roues d'engrenage périphériques 36. Dans un mode de réalisation, tel que montré à la figure 2, les roues d'engrenage périphériques 36 sont groupées en trois paires 36a, 36b, 36c, les roues d'engrenage périphériques 36 de chaque paire 36a, 36b, 36c ayant un diamètre respectif d7, d8, d9 différent des autres paires. Dans ce mode de réalisation, les roues d'engrenage périphériques 36 d'un même groupe 36a, 36b, 36c sont disposées telles que leurs centres sont des sommets opposés d'un hexagone H3 (montré en pointillés) formé par les centres C2 des roues d'engrenage périphériques 36. Cependant, il est envisagé que les roues d'engrenage périphériques de même diamètre 36a, 36b, 36c pourraient ne pas être disposées à des sommets opposés de l'hexagone H3 et/ou ne pas être disposées par paires de roues de même diamètre. Il est aussi envisagé que les roues d'engrenage périphériques 36 pourraient être engrenées sur les roues d'engrenage intermédiaires 34 par un agencement autre que par paires.

De façon similaire au dispositif d'entrainement 20, pour chaque position de la roue centrale 32 du dispositif d'entrainement 30 entrainée par le moteur 21, il existe une position unique du plateau 14. Bien que le mode de réalisation de la figure 2 montre les six bielles 16 mises en mouvement, il est envisagé que 3, 2 ou 1 de ces bielles 16 pourraient avoir leurs extrémités inférieures 18 directement connectées à la base 12, par exemple par des liaisons rotule ou des liaisons à joints de cardan. Ainsi, le dispositif d'entrainement 30 pourrait n'avoir que 3, 4 ou 5 roues d'engrenage périphériques 36.

Similairement au dispositif d'entrainement 20, le dispositif d'entrainement 30 et la connexion excentrique des bielles 16 est prédéfini de sorte que les bielles commandées impriment au plateau 14 un mouvement périodique selon au moins trois degrés de liberté (choix de diamètres des roues périphériques et des connections aux bielles commandées pour déphaser ou pas les mouvements des bielles les unes par rapport aux autres).

Que ce soit pour le dispositif d'entrainement 20 ou le dispositif d'entrainement 30, dans le cas particulier où les roues d'engrenage périphériques 24 (ou 36) sont associées par paires de diamètres, l'indépendance algébrique selon trois degrés de liberté peut être réalisée en ayant au moins la période différente entre les paires (i.e. roues périphériques de différents diamètres par paires). Pour obtenir une indépendance algébrique selon les 6 degrés de liberté (si l'application le demande, par exemple pour mélanger des produits dans l'objet 15), au sein de chaque paire ayant la même période de mouvement, les phases sont différentes (e.g. quadrature). Lorsque les bielles 16 sont en opposition de phase à l'intérieur d'une paire, les extrémités inférieures 18 sont, à un moment donné pendant leur mouvement, alignées avec les centres C2 de la paire de roues d'engrenage périphériques 36a ou 36b ou 36c, et les centres C2 de ces roues sont disposés à l'intérieur des extrémités inférieures 18. Dans un mode de réalisation, en opposition de phase, il existe au moins un point parmi les positions du plateau 14 mis en mouvement où les extrémités inférieures 18 des trois paires de bielles 16 sont simultanément alignées avec les centres des paires de roues d'engrenage périphériques 36a ou 36b ou 36c correspondantes, à l'intérieur ou à l'extérieur des centres de leur roues d'engrenage périphériques 36a ou 36b ou 36c correspondantes.

Lorsque les bielles 16 d'une paire de bielles 16 connectées à une des paires de roues d'engrenage périphériques 36a ou 36b ou 36c sont en opposition de phase, il y a apparition d'un point fixe, aussi connu sous le nom de point tranquille, du plateau 12. Ainsi, le plateau 14 bouge seulement en rotation autour du point tranquille, c'est-à-dire sans effectuer de mouvements de translation qui seraient parasites pour le calcul de la matrice d'inertie. Faire apparaitre un point tranquille peut simplifier les calculs de caractéristiques d'inertie par exemple. La projection du point tranquille sur le plateau 14 est au barycentre des sommets de l'hexagone formé par les extrémités supérieures 17 des bielles 16. Si cet hexagone est régulier, il est au barycentre (pas de projection). Si les côtés de l'hexagone correspondant aux couples 25 de bielles 16 sont plus petits que les autres côtés, alors le point tranquille est situé au-dessus du plan de cet hexagone. Cette disposition peut être particulièrement favorable car elle permet de rapprocher le centre de gravité de l'objet 15 de ce point tranquille et, ainsi, de limiter les déplacements de celui-ci, les mouvements du plateau 14 correspondant alors à des rotations autour d'axes instantanés passant près du centre de gravité.

Dans un mode de réalisation, les paires 24a, 24b, 24c (ou 36a, 36b, 36c) de roues d'engrenage périphériques 24 (ou 36) de même diamètre ont des diamètres qui sont proportionnels respectivement à trois entiers premiers entre eux. Ainsi, les périodes élémentaires des mouvements élémentaires des supports commandés (pris par paires) sont proportionnelles à ces mêmes entiers. Le plus petit commun multiple (PPCM) des périodes élémentaires de chaque paire de bielles 16 définit la période d'un cycle complet des positions prédéfinies par lequel le plateau 14 va passer, c'est-à-dire la période du mouvement du plateau. Dans un mode de réalisation, les périodes élémentaires sont choisies de telle sorte que le rapport entre la période du plateau et la plus grande des trois périodes élémentaires soit le plus faible possible de façon à minimiser la période du cycle complet des positions prédéfinies du plateau 14. Dans un mode de réalisation préférentiel, les périodes élémentaires des mouvements des paires de bielles 16 sont proportionnelles respectivement à 4, 5 et 6, donnant un PPCM de 60. Ceci conduit à une période du cycle complet du plateau 14 proportionnelle à 60, soit respectivement 15, 12 et 10 tours de chaque paire de roues 24a, 24b, 24c (ou 36a, 36b, 36c). Dans un mode de réalisation, un rapport entre la période du plateau et la plus petite période élémentaire desdites au moins trois mouvements élémentaires est inférieure ou égale à 15. Dans un mode de réalisation, un rapport entre la période du plateau et la plus grande période élémentaire desdites au moins trois mouvements élémentaires est inférieure ou égale à 10. Le mouvement du plateau est ainsi choisi pour, selon une application possible, avec un minimum de cycles de mouvements, déduire plus rapidement et plus facilement une matrice d'inertie de l'objet 15. Dans un autre mode de réalisation, les périodes des mouvements des paires de roues 24a, 24b, 24c (ou 36a, 36b, 36c) sont proportionnelles respectivement à 10, 12 et 15, ce qui conduit à une période du cycle complet proportionnelle à 60, soit respectivement 6, 5 et 4 cycles de chaque paire de bielles.

Dans un mode de réalisation, les périodes élémentaires des mouvements des paires de bielles 16 sont choisies du même ordre de grandeur afin que les contributions de chaque paire de bielles 16 aux accélérations communiquées à l'objet 15 soient également du même ordre de grandeur. Dans un mode de réalisation, l'excentricité des extrémités inférieures 18 de bielles 16 est aussi grande que permise par le diamètre des roues d'engrenage périphériques 24 (ou 36) sur lesquels chaque pied est connecté, et les rayons excentriques (i.e. distance entre l'extrémité inférieure 18 de la bielle 16 et le centre de la roue d'engrenage périphérique associée) des deux bielles d'une même paire sont identiques.

Comme les bielles 16 sont liées entre elles mécaniquement par le dispositif d'entrainement 20 (ou 30) dans les formes de réalisation, le dispositif d'entrainement 20 (ou 30) peut être actionné par un seul moteur 21 connecté à la roue d'engrenage centrale 23 (ou 32). Un avantage de cette configuration est que la puissance instantanée du moteur 21 peut être faible puisque l'énergie cinétique globale du dispositif est pratiquement constante pour une vitesse constante du dispositif d'entrainement. Ceci assure, de plus, une meilleure précision et stabilité en vitesse du dispositif d'entrainement. Dans un mode de réalisation, le moteur 21 est un moteur électrique. Dans un mode de réalisation le moteur 21 commande la roue d'engrenage centrale 23 (ou 32) par l'intermédiaire d'un jeu de pignons réducteurs. Il se pourrait cependant que le dispositif d'actionnement soit tel que plus qu'un moteur actionne le dispositif d'entrainement.

Il est envisagé que le dispositif d'entrainement pour l'hexapode 10 pourrait avoir différents modes de réalisation qui imprimeraient un mouvement périodique du plateau dans au moins trois degrés de liberté. Un tel mode de réalisation pourrait de plus ne pas contenir des roues d'engrenages. Par exemple, le dispositif d'entrainement pourrait comporter des roues s'entraînant entre elles par friction, des courroies lisses ou crantées, pignons, renvois d'angles et/ou boites de vitesses, transmissions électriques, hydraulique, pneumatique ou autres. Ces modes de réalisation pourraient être choisis par exemple en fonction de la taille de l'objet 15 à mesurer.

La tourelle hexapode 10 inclut optionnellement des moyens de mesurer les efforts subis par l'objet à mesurer au cours des mouvements périodiques. Ces moyens pourraient avoir la forme d'un plateau de capteurs disposé entre le plateau 14 et l'objet 15. Ces moyens peuvent aussi être constitués par des capteurs d'efforts 19 qui collectent des efforts longitudinaux subis par les bielles 16. Le dispositif 10 inclut au moins trois capteurs d'efforts 19, et préférentiellement six, un par bielle 16. Les capteurs d'efforts 19 sont associés aux bielles 16 pour mesurer les efforts longitudinaux des bielles 16 lors des mouvements du plateau 14. Les efforts longitudinaux incluent les efforts de compression et de traction. Les capteurs d'efforts 19 peuvent être par exemple des capteurs d'efforts placés à l'une des extrémités des bielles 16, ou bien des jauges de contraintes placées directement sur les bielles 16. Les capteurs d'efforts 19 peuvent être placés sur n'importe quelle bielle 16, commandée ou pas. Dans le cas où les bielles 16 sont disposées par paires sur les roues d'engrenage périphériques 24a, 24b, 24c (ou 36a, 36b, 36c) ayant un même diamètre, il pourrait y avoir un seul capteur d'effort 19 par paire de bielles 16.

Les capteurs d'efforts 19 communiquent avec une unité centrale 22 qui en déduit, dans un mode de réalisation, les caractéristiques inertielles de l'objet 15. Les informations fournies par les capteurs d'efforts 19 peuvent permettre, par exemple, de mesurer le torseur des efforts subis par le dispositif 10, puisque la relation entre les efforts longitudinaux dans les bielles 16, et le torseur des efforts appliqués au plateau 14 (et donc subis par l'objet 15) est biunivoque. Le torseur des efforts appliqués à l'ensemble du plateau 14 et de l'objet 15 est proportionnel aux caractéristiques inertielles de cet ensemble. Ainsi, les caractéristiques inertielles de l'objet 15 seul peuvent être déduites en faisant aussi une mesure des caractéristiques inertielles du plateau 14 à vide, suivant le même principe que celui de la tare pour une balance classique.

L'unité centrale 22 comprend un module de communication 22a qui reçoit une information d'effort sur les bielles 16 par les capteurs d'efforts 19 et une information de position de la roue d'engrenage centrale 23 par le capteur 51, et un module de calcul 22b qui détermine une ou plusieurs caractéristiques de l'objet 15 à partir de l'information d'effort des capteurs d'efforts 19. Grace aux informations d'effort, le module de calcul 22b peut déterminer, dans un mode de réalisation, une masse de l'objet 15, et/ou une position du centre de gravité de l'objet 15, et/ou une matrice d'inertie de l'objet 15, selon un procédé qui sera décrit ci-dessous. Le module de communication 22a communique avec le module de calcul 22b et avec un affichage (non illustré) pour afficher les caractéristiques trouvées par le module de calcul 22b.

Optionnellement, le module de communication 22a pourrait recevoir une information de vitesse de rotation du dispositif 10. En effet, la vitesse de rotation du moteur 21 telle que prévue par le constructeur du moteur en fonction de la commande, pourrait être trop imprécise. Ainsi dans un mode de réalisation, la vitesse réelle du dispositif 10 est déterminée en calculant une vitesse de rotation de la roue d'engrenage centrale 23 (ou 32) à partir des informations d'un capteur de position 51. Dans un mode de réalisation, le capteur de position 51 détecte les instants de passage par des positions prédéfinies et régulièrement espacées de la roue d'engrenage centrale 23 (ou 32) (par exemple codeur optique ou encodeur rotatif). Dans un autre mode de réalisation, le capteur de position 51 est disposé sur une autre roue d'engrenage du dispositif d'entrainement 20 (ou 30) que la roue d'engrenage centrale 23 (ou 32). Les positions prédéfinies peuvent, par exemple, être définies par les dents de la roue d'engrenage sur laquelle est placé le capteur de position 51. Dans ces cas, le dispositif mesure les instants de passage par les positions prédéfinies et la vitesse de rotation peut être calculée par différences finies à partir des dates de passage par deux positions successives. De la même façon, si la vitesse d'entrainement n'est pas constante, l'accélération peut être calculée à partir des dates de passage par trois positions successives.

Le module de calcul 22b et/ou le module de communication 22a pourraient être séparés l'un de l'autre et/ou de l'unité centrale 22. Par exemple, l'unité centrale 22 pourrait recevoir une alimentation externe et être relié par un câble USB à un ordinateur qui exploiterait les mesures.

En référence maintenant à la figure 3, un autre mode de réalisation d'une tourelle hexapode 40 est montré schématiquement. La tourelle hexapode 40 est similaire à la tourelle hexapode 10, mais a des vérins pour supports au lieu de bielles et un dispositif d'actionnement qui ne lie pas les vérins entre eux de façon mécanique. La tourelle hexapode 40 inclut une base 42, un plateau 44 pour recevoir un objet 45, et six vérins 46 connectant la base 42 au plateau 44. Les vérins 46 pourraient être électriques, pneumatiques ou hydrauliques. Le plateau 44 est mis en mouvement par le dispositif d'actionnement. Le dispositif d'actionnement comprend plusieurs actionneurs. Chaque vérin 46 est mis en mouvement (élongation ou raccourcissement) par un actionneur, typiquement un moteur, 47 respectif (c'est-à-dire un actionneur 47 par vérin 46). Les actionneurs 47 sont contrôlés par une unité centrale 48 similaire en structure à l'unité centrale 22, et qui de plus réalise la synchronisation des actionneurs 47. L'unité centrale 48 contrôle les actionneurs 47 de telle sorte que les actionneurs 47 impriment un mouvement spatialement périodique aux vérins 46. De plus, entre eux, les vérins 46 ont un mouvement périodique prédéfini tel que le plateau 44 est animé d'un mouvement périodique dans au moins trois degrés de liberté, similaire à celui discuté plus haut pour la tourelle hexapode 10. Tel que discuté plus haut pour le système 10, un mouvement est selon au moins trois degrés de liberté s'il est la combinaison d'au moins trois mouvements élémentaires périodiques algébriquement indépendants entre eux. Une façon simple d'obtenir au moins trois mouvements algébriquement indépendants entre eux est d'actionner au moins trois vérins 46 selon trois périodes différentes, dites périodes élémentaires, qui sont sous-multiples de la période du mouvement périodique du plateau 14.

La tourelle hexapode 40 inclut préférentiellement des capteurs d'effort 49 qui collectent des efforts longitudinaux subis par les vérins 46. Les capteurs d'effort 49 communiquent avec l'unité centrale 48 qui, dans un mode de réalisation, en déduit les caractéristiques inertielles de l'objet 45. Les extrémités inférieures des vérins 46 sont connectées à la base 42 par exemple par des liaisons rotule ou par des liaisons à joint de cardan. Les extrémités supérieures des vérins 46 sont connectées au plateau 44 par exemple par des liaisons rotule ou par des liaisons à joint de cardan.

Quel que soit le mode de réalisation de la tourelle hexapode 10 (ou 40) ci-dessus, les supports commandés (par exemple, bielles 16 ou vérins 46) sont entrainés de sorte qu'ils aient un mouvement spatialement périodique. Ainsi, pour un dispositif d'entrainement mécanique, tel que les dispositifs 20 et 30, le mouvement spatialement périodique est imprimé par la rotation des diverses roues d'engrenage, les extrémités inférieures 18 des bielles 16 décrivant des cercles lorsque mises en mouvement, puisque connectés excentriquement aux roues d'engrenage périphériques 24 (ou 36). Pour un dispositif d'entrainement impliquant des supports commandés pouvant varier en longueur, comme les vérins 46, leur actionneurs associés 47 impriment des mouvements d'élongation et de raccourcissement périodiques. Les supports commandés peuvent être entrainés à vitesse constante ou à vitesse variable. Cependant, il pourrait être préférable d'entrainer les supports commandés à vitesse constante pour des applications telles que les calculs de caractéristiques d'inerties, puisqu'à vitesse constante, pour une position donnée, les efforts d'inertie sont directement proportionnels au carré de cette vitesse.

De plus, quel que soit le mode de réalisation de la tourelle hexapode 10 (ou 40) ci-dessus, les supports commandés (par exemple, bielles 16 ou vérins 46) sont entrainés en mouvement de sorte que le plateau 14 (ou 44) ait un mouvement périodique prédéfini selon au moins trois degrés de liberté. Ce mouvement prédéfini peut ne pas dépendre de l'objet, c'est-à-dire de sa taille, forme et/ou de son poids. Ainsi le même mouvement périodique du plateau peut être utilisé pour déterminer la matrice d'inertie de divers objets, ce qui peut permettre, par exemple, d'effectuer des mesures d'inerties de façon plus rapide entre objets différents. Dans le cas du dispositif à entrainement 40 avec vérins 46, impliquant l'utilisation des actionneurs 47 associés à chaque vérin 46, les actionneurs 47 sont programmés selon au moins trois fonctions périodiques indépendantes (et de périodes différentes et sous-multiples de la période du plateau) afin de réaliser l'indépendance algébrique du mouvement du plateau. Par contre, dans le cas d'un dispositif d'entrainement mécanique avec roues à engrenage tel que le dispositif d'entrainement 20 (ou 30), cette indépendance algébrique peut être établie en jouant sur les paramètres du dispositif d'entrainement 20 (ou 30) (e.g. diamètres des roues périphériques 24 (ou 36) les unes par rapport aux autres) et sa relation aux supports commandés (e.g. opposition de phase, quadrature, phase).

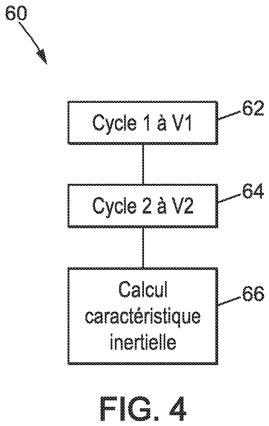

En se référant maintenant à la figure 4, un procédé 60 de détermination de caractéristiques inertielles de l'objet utilisant l'un des dispositifs 10 ou 40 décrits ci-dessus va être décrit. Le procédé 60 comprend les étapes suivantes.

À l'étape 62, le dispositif 10 (ou 40) est entrainé en mouvement par le moteur 21 (ou actionneurs 47) dans un premier cycle de mesures. Le premier cycle de mesures est effectué en entrainant le plateau 14 à une première vitesse V1 (ou vitesse minimale). Dans cet exemple, le plateau 14 (ou 44) passe par chaque point d'un ensemble prédéfini de points de mesure à cette première vitesse V1. L'ensemble prédéfini de points de mesure inclut une pluralité de points de mesure dont au minimum trois points associés à trois mouvements instantanés indépendants du plateau 14 (ou 44). Les trois mouvements instantanés indépendants sont trois mouvements pour lesquels les axes instantanés de rotation et/ou translation du plateau 14 (ou 44) sont trois vecteurs non coplanaires. Les trois vecteurs non coplanaires forment de préférence un trièdre aussi proche que possible d'un trièdre orthogonal. Une quantité accrue des points de mesure améliore la précision des mesures en permettant de filtrer différents types de bruits de mesure. Il est ainsi avantageux d'avoir au moins cinq points de mesure par cycle de la paire de bielles 16 de plus petite période. Cependant, seul un petit nombre de points de mesures peut suffire pour l'application de calcul de la matrice d'inertie de l'objet 15 ou 45. En effet, grâce à la réalisation simultanée des mouvements selon les au moins trois degrés de liberté du plateau, tel que décrit plus haut, la détermination de la matrice d'inertie est ainsi simplifiée et plus rapide qu'avec les méthodes existantes, car la durée des mesures est réduite du fait de la superposition des trois mouvements qui sont fait l'un après l'autre dans l'art antérieur.

Dans un exemple, les roues périphériques 24 (ou 36) sont groupées par paires de roues ayant 40, 50, et 60 dents (le nombre de dents étant lié au diamètre de la roue), les paires de roues périphériques font respectivement 15, 12, et 10 tours par cycle complet de mesures. Si, par exemple, on définit un point de mesure toutes les 5 dents on aura donc respectivement 8, 10 et 12 points de mesure par tour de chaque paire de roues et au total 120 points de mesure pour un cycle complet. Si on définit un point de mesure par dent, on aura 600 points de mesure par cycle complet.

Les capteurs d'efforts 19 (ou 49), en temps réel, collectent l'information des efforts longitudinaux subis par au moins trois des supports (qui pourraient être tous, une partie ou aucun des supports commandés) en chaque point de l'ensemble prédéfini de points de mesure et le capteur 51 collecte les dates de passage par ces positions. Le module de communication 22a reçoit ces informations et les stocke avant de les envoyer au module de calcul 22b de l'unité centrale 22 (ou 48). Dans un mode de réalisation, la première vitesse V1 est constante. La première vitesse V1 est prédéfinie en fonction d'une deuxième vitesse V2 (ou vitesse maximale) à laquelle le système va être entrainé à l'étape 64.

La vitesse maximale est préférentiellement choisie en fonction d'une grandeur de l'objet 15 (ou 45) testé, ceci afin que la composante des efforts d'inertie dans les supports commandés ou non 16 soient du même ordre de grandeur que la composante du poids dans les supports 16 (ou 46) pour que les supports 16 (46) restent en compression lors des mouvements du dispositif 10 (ou 40), évitant ainsi des mouvements parasites qui pourraient être induits par des jeux mécaniques. Cette vitesse maximale dépend de l'inertie de l'objet 15 (ou 45) et des dimensions du dispositif 10 (ou 40). Elle peut être déterminée expérimentalement pour chaque objet 15 (ou 45) en l'augmentant progressivement jusqu'à la limite de passage en traction d'une des bielles. Typiquement, pour un objet dont la longueur est de l'ordre de quelques dizaines de cm, cette vitesse correspond à une fréquence de rotation de quelques Hz pour les roues périphériques. Cette vitesse maximale est, dans un mode de réalisation, inversement proportionnelle à la taille de l'objet à mesurer.

La vitesse minimale est choisie préférentiellement pour être la plus faible possible tout en restant compatible avec une durée d'essai acceptable. Dans un mode de réalisation, la vitesse minimale est plus petite que la moitié de la vitesse maximale. A titre d'exemple, dans le mode de réalisation où les paires de roues périphériques ont des diamètres respectivement proportionnels à 4, 5 et 6, pour une fréquence maximale de la plus petite roue de 2Hz, la durée du cycle complet à la vitesse maximale correspondant à 15 tours de la petite roue sera donc de 7.5 secondes. Si l'on choisit une vitesse minimale égale à 1/3 de la vitesse maximale, la durée du cycle à la vitesse minimale sera de 22.5 secondes, ce qui permet largement de faire une mesure complète en moins d'une minute en incluant les phases transitoires entre les deux cycles.

Ainsi, à l'étape 62, lorsque le moteur entraine le dispositif d'entrainement 20 (ou 30) à la première vitesse V1, la roue d'engrenage centrale 23 (ou 32) imprime au plateau un mouvement périodique selon au moins trois degrés de liberté. Pour le dispositif 40, les moteurs 47 sont programmés pour que les vérins 46 aient chacun un mouvement périodique et comportant au moins trois périodes différentes entre elles, sous-multiples de la même période du plateau 14.

À l'étape 64, le dispositif 10 (ou 40) est entrainé en mouvement pour effectuer un deuxième cycle de mesures. Le deuxième cycle de mesures s'effectue à la deuxième vitesse V2 différente de la première vitesse V1. Le plateau 14 (ou 44) passe de nouveau par chaque point de l'ensemble prédéfini de points, cette fois-ci à la deuxième vitesse V2. Les capteurs d'efforts 19 (ou 49), en temps réel, collectent l'information des efforts longitudinaux subis par les supports commandés (bielles 16 ou vérins 46) en chaque point de l'ensemble prédéfini de points de mesure. Le module de communication 22a reçoit ces informations et les stocke avant de les envoyer au module de calcul 22b. Dans un mode de réalisation, la deuxième vitesse V2 est plus grande que la première vitesse V1. Dans un mode de réalisation, la deuxième vitesse V2 est au moins deux fois plus grande que la première vitesse V1. Dans un mode de réalisation, la deuxième vitesse V2 est constante. Dans un mode de réalisation, la deuxième vitesse V2 est la vitesse maximale, telle que déterminée ci-dessus.

Dans un mode de réalisation, l'étape 62 est effectuée à la vitesse maximale et l'étape 64 est effectuée à la vitesse minimale. Dans un mode de réalisation, les étapes 62 et 64 peuvent être répétées avec plus de deux vitesses différentes dans le but d'améliorer la précision de mesure. Les premier et deuxième cycles de mesures peuvent ne pas être effectués séquentiellement. Par exemple, les premier et deuxième cycles de mesures sont effectués conjointement par un entrainement à vitesse variable de façon à passer au moins deux fois par les même positions prédéfinies du plateau 14, avec deux vitesses différentes. Ainsi, dans un mode de réalisation les étapes 62 et 64 peuvent être remplacées par une seule étape 63 consistant à passer par les positions prédéfinies avec une vitesse d'entrainement périodique, une ou plusieurs fois. Dans ce cas il est souhaitable que le rapport entre les vitesses d'entrainement maximale et minimale soit au moins égale à 2. Dans un mode de réalisation, les étapes 62 et 64 ou 63 peuvent être répétées en inversant le sens de la vitesse d'entrainement. Cette étape supplémentaire peut permettre par la suite d'éliminer les composantes des efforts qui dépendent du sens de la vitesse d'entrainement comme, par exemple les efforts aérodynamiques ou de frottements solides dans les articulations du dispositif, dans le calcul des caractéristiques d'inertie de l'objet 15 (ou 45).

La méthode pourrait inclure plusieurs étapes similaires aux étapes 62 et 64.

À l'étape 66, le module de calcul 22b de l'unité centrale 22 (ou 48) détermine, dans un mode de réalisation, au moins une des caractéristiques inertielles de l'objet 15 (ou 45). Dans le mode de réalisation où l'on utilise un petit nombre, au moins égal à trois, de positions prédéfinies du dispositif 10 (ou 40), le calcul des caractéristiques inertielles peut se faire par une méthode de moindres carrés en déterminant les caractéristiques qui correspondent le mieux aux mesures réalisées en fonction des efforts, positions et vitesses mesurées. Dans le mode de réalisation où les bielles 16 sont connectées à des roues d'engrenage périphériques 24 (ou 36) de même diamètre par paires, si l'on utilise au moins cinq positions iso-espacées sur les roues de plus petit diamètre, et si l'on anime le dispositif 10 en réalisant des cycles complets à vitesse constante, un calcul de la matrice d'inertie s'en trouve simplifié. Par filtrage de Fourier, on peut extraire le mouvement isolé de chaque paire de bielles 16 et les efforts associés(les autres étant considérées fixes) pour chaque mouvement élémentaire, ce qui permet d'en déduire la matrice d'inertie suivant les techniques conventionnelles.

Dans un mode de réalisation, il est alors avantageux de calculer, pour chaque cycle complet d'une part, la valeur moyenne des efforts pour chaque capteur d'efforts 19, et d'autre part la composante en fréquence (filtrage de Fourier) correspondant à la fréquence fondamentale de chaque paire de bielles, c'est-à-dire la fréquence de rotation de la paire de roue associée. La valeur moyenne des efforts correspond à l'effet du poids seul pour la position moyenne du plateau 14. Elle est identique pour tous les cycles de mesure, quels que soient la vitesse et le sens choisi aux étapes 62, 64 et 63. La composante en fréquence correspond à l'effet de la rotation autour d'un seul axe défini par le mouvement d'une seule paire de bielles 16, les extrémités inférieures 18 des autres bielles 16 étant fixés à leur position moyenne. Pour chaque fréquence, la composante correspondante est elle-même la somme de :
∘ L'effet de déplacement du centre de gravité qui est indépendant de la vitesse ;
∘ L'effet des efforts d'inertie de rotation qui est proportionnel au carré de la vitesse ; et
∘ L'effet d'efforts aérodynamiques ou de frottement solide ou de légères variations de la vitesse d'entrainement. Ces efforts seuls dépendent du sens de la vitesse d'entrainement et peuvent être éliminés en faisant la moyenne des composantes obtenues pour deux vitesses d'entrainement de même valeur et de sens opposés.

Ainsi, à partir des composantes pour une fréquence donnée obtenues pour au moins deux vitesses différentes, on peut séparer les effets de déplacement du centre de gravité et d'inertie de rotation pour chacun des trois axes de rotation. La combinaison de ces informations pour les trois axes permet de reconstituer totalement la position du centre de gravité et la matrice d'inertie.

La position moyenne du plateau 14 et les axes de rotation correspondant au mouvement d'une seule paire de bielles 16 peuvent être déterminés à partir de la géométrie des différents éléments ou identifiés dans une phase d'étalonnage par des moyens externes de mesure de position. Ces données sont indépendantes de l'objet mesuré et de la vitesse d'entrainement. De même la géométrie des différents éléments permet de connaitre, pour chaque positon prédéfinie, la matrice de passage entre les efforts dans les bielles 16 et le torseur des efforts appliqués au plateau 14. La même méthode s'applique à la tourelle hexapode 40 animée par les vérins 46.

La description ci-dessus est destinée à n'être qu'un exemple, et l'homme du métier reconnaîtra que des modifications peuvent être apportées aux modes de réalisation décrits sans sortir du cadre de l'invention telle que formulée dans les revendications annexées. D'autres modifications qui entrent dans le cadre de la présente apparaîtront à l'homme du métier à la lumière d'une révision de cette description et de telles modifications sont censées entrer dans les revendications annexées.

## Revendications

1. Dispositif (10, 40) de mise en mouvement d'un objet (15, 45), le dispositif (10, 40) comprenant :
une base (12, 42) et un plateau (14, 44) adapté à recevoir l'objet (15) ;
six supports (16, 46) ayant chacun une extrémité supérieure (17) connectée au plateau (14, 44) et une extrémité inférieure (18) connectée à la base (23, 42), l'extrémité supérieure (17) et l'extrémité inférieure (18) de chaque support (16, 46) ayant de façon combinée au moins cinq degrés de liberté ; et
un dispositif d'actionnement connecté à au moins trois des supports (16, 46), le dispositif d'actionnement étant adapté pour imprimer des mouvements périodiques prédéfinis auxdits au moins trois des six supports (16), ces trois supports (16) étant dits supports commandés, imprimant ainsi un mouvement périodique au plateau (14) par rapport à la base (12) selon au moins trois degrés de liberté,
**caractérisé en ce que**
ledit mouvement périodique du plateau (14) est composé d'au moins trois mouvements élémentaires périodiques définissant chacun un degré de liberté du mouvement du plateau, chacun desdits au moins trois mouvements élémentaires périodiques a une période, dite période élémentaire, différente les unes des autres, les périodes élémentaires étant des sous-multiples de la période du mouvement périodique du plateau (14), les déplacements du plateau (14) selon chacun des mouvements élémentaires périodiques étant algébriquement indépendants les uns des autres.

2. Dispositif (10, 40) selon la revendication 1, dans lequel le rapport entre la période du plateau et la plus grande des périodes élémentaires est inférieur ou égal à 10.

3. Dispositif (10) selon l'une quelconque des revendications 1 ou 2, dans lequel les six supports sont des bielles (16) ; et
le dispositif d'actionnement comprend un dispositif d'entrainement (20, 30) connectant mécaniquement lesdits supports commandés, le dispositif d'entrainement (20, 30) étant commandé par un unique actionneur (21).

4. Dispositif (10) selon la revendication 3, dans lequel le dispositif d'entrainement (20) inclut :
une roue d'engrenage centrale (23) adaptée à être mise en rotation par l'actionneur (21), et
au moins trois roues d'engrenage périphériques (24) engrenées sur la roue d'engrenage centrale (23), et
lesdits au moins trois supports commandés (16) ont leur extrémité inférieure (18) connectée respectivement de façon excentrique à chacune desdites au moins trois roues d'engrenage périphériques (24).

5. Dispositif (10) selon la revendication 3, dans lequel le dispositif d'entrainement (30) inclut :
une roue d'engrenage centrale (32) adaptée à être mise en rotation par l'actionneur (21),
trois roues d'engrenage intermédiaires (34) engrenées sur la roue d'engrenage centrale (32),
six roues d'engrenage périphériques (36) engrenées par groupe de deux (35) sur chacune des trois roues d'engrenage intermédiaires (34),
lesdits au moins trois supports commandés (16) sont six supports commandés, et
les six supports commandés (16) ont leur extrémité inférieure (18) connectée de façon excentrique à chacune une desdites roues d'engrenage périphériques (24) respectivement.

6. Dispositif (10) selon la revendication 4 ou 5, dans lequel les six roues d'engrenage périphériques (24, 36) sont groupées par paires de même diamètre (24a, 24b, 24c ; 36a, 36b, 36c), les diamètres des roues d'engrenage périphériques de chaque paire (24a, 24b, 24c ; 36a, 36b, 36c) étant différents d'une paire à l'autre.

7. Dispositif (10) selon la revendication 6, dans lequel les roues d'engrenage périphériques de même diamètre (24a, 24b, 24c ; 36a, 36b, 36c) ont chacune un centre,
les centres formant les sommets d'un hexagone, et
les roues d'engrenage périphériques de même diamètre (24a, 24b, 24c ; 36a, 36b, 36c) sont disposées suivant des sommets opposés de l'hexagone qu'elles constituent.

8. Dispositif (10) selon la revendication 6 ou 7, dans lequel les diamètres deux à deux des paires de roues d'engrenage périphériques (24a, 24b, 24c ; 36a, 36b, 36c) de même diamètre sont proportionnels à trois nombres entiers premiers entre eux.

9. Dispositif (10) selon la revendication 8, dans lequel les diamètres deux à deux des trois paires de roues d'engrenage périphériques (24a, 24b, 24c ; 36a, 36b, 36c) de même diamètre sont respectivement proportionnels à 4, 5 et 6, ou à 10, 12 et 15.

10. Dispositif (10) selon l'une des revendications 6 à 9, dans lequel les bielles (16) connectées à des roues d'engrenage périphériques d'une même paire de même diamètre (24a, 24b, 24c ; 36a, 36b, 36c) sont en opposition de phase.

11. Dispositif (10, 40) selon l'une quelconque des revendications 1 à 10, comprenant de plus :
au moins trois capteurs d'efforts (19, 49) longitudinaux associés à au moins trois des six supports (16) ; et
une unité centrale (22, 48) connectée au dispositif d'actionnement et auxdits au moins trois capteurs d'efforts (19, 49) longitudinaux, l'unité centrale (22, 48) étant adaptée à collecter des informations d'effort desdits au moins trois capteurs d'efforts (19, 49) longitudinaux.

12. Dispositif (10, 40) selon la revendication 11 en combinaison avec l'une des revendications 3 à 9, comprenant de plus un capteur de position (51) adapté pour détecter le passage de la roue d'engrenage centrale (23, 32) par au moins trois positions prédéfinies, ledit capteur de position (51) communiquant avec l'unité centrale (22) pour en déduire une vitesse de la roue d'engrenage centrale (23, 32) au passage par chacune desdites au moins trois positions prédéfinies.

13. Procédé (60) de mise en mouvement d'un objet (15, 45) utilisant le dispositif (10, 40) selon l'une des revendications 1 à 12, et comprenant de plus :
- entrainer le dispositif (10, 40) par ledit dispositif d'actionnement de manière à imprimer le mouvement périodique au plateau (14, 44) selon lesdits au moins trois degrés de libertés.

14. Procédé (60) selon la revendication 13 utilisant le dispositif (10, 40) selon l'une des revendications 11 et 12, dans lequel l'étape d'entraînement du dispositif (10, 40) comprend :
- entrainer le dispositif (10, 40) par ledit dispositif d'actionnement pour passer par chaque position d'un ensemble prédéfini de positions du plateau (14, 44) à au moins une première vitesse et une deuxième vitesse, ainsi réalisant au moins un premier et un deuxième cycle de mesures, l'ensemble prédéfini de positions comportant au moins trois positions pour lesquelles les mouvements instantanés du plateau à ces positions sont algébriquement indépendants entre eux ;
- collecter par l'unité centrale (22, 48), les informations d'effort pour chaque position de l'ensemble prédéfini de positions du plateau (14, 44) lors de l'entrainement auxdites au moins première vitesse et deuxième vitesse ; et
- déterminer, par l'unité centrale (22, 48), au moins une caractéristique d'inertie à partir des mouvements du plateau (14, 44) et des informations d'effort correspondant à ces mouvements.

15. Procédé (60) selon la revendication 14 en combinaison avec le dispositif selon la revendication 12, dans lequel l'unité centrale (22), pour chacune desdites au moins première et deuxième vitesses, collecte des données du capteur de position (51) de la roue d'engrenage centrale (23, 32) pour chaque position de l'ensemble prédéfini de positions du plateau (14), et l'unité centrale (22) fait la moyenne des données du capteur de position (51) pour en déduire une vitesse réelle moyenne de la roue d'engrenage centrale (23, 32) pour chacun desdits au moins premier et deuxième cycles de mesures.

16. Procédé (60) selon l'une des revendications 14 et 15, dans lequel l'étape de détermination d'au moins une caractéristique d'inertie des données comprend une extraction par filtre de Fourier d'une valeur moyenne et des composantes de chaque effort sur les fréquences fondamentales des mouvements élémentaires périodiques pour chacun desdits au moins premier et deuxième cycles de mesures.

## Patentansprüche

1. Vorrichtung (10, 40) zum Bewegen eines Objekts (15, 45), wobei die Vorrichtung (10, 40) Folgendes umfasst:
eine Basis (12, 42) und eine Platte (14, 44), die zur Aufnahme des Objekts (15) geeignet ist;
sechs Stützen (16, 46), von denen jede ein oberes Ende (17), das mit der Platte (14, 44) verbunden ist, und ein unteres Ende (18), das mit der Basis (23, 42) verbunden ist, aufweist, wobei das obere Ende (17) und das untere Ende (18) jeder Stütze (16, 46) in Kombination wenigstens fünf Freiheitsgrade aufweisen; und
eine Betätigungsvorrichtung, die mit wenigstens drei der Stützen (16, 46) verbunden ist, wobei die Betätigungsvorrichtung dazu geeignet ist, den wenigstens drei der sechs Stützen (16) vordefinierte periodische Bewegungen aufzuzwingen, wobei die drei Stützen (16) sogenannte gesteuerte Stützen sind, wodurch der Platte (14) eine periodische Bewegung relativ zu der Basis (12) mit wenigstens drei Freiheitsgraden aufgezwungen wird,
**dadurch gekennzeichnet, dass**
die periodische Bewegung der Platte (14) aus wenigstens drei periodischen Elementarbewegungen zusammengesetzt ist, die jeweils einen Freiheitsgrad der Bewegung der Platte definieren, wobei jede der wenigstens drei periodischen Elementarbewegungen eine Periode aufweist, Elementarperiode genannt, jeweils voneinander verschieden, wobei die Elementarperioden untergeordnete Vielfache der Periode der periodischen Bewegung der Platte (14) sind, wobei die Verlagerungen der Platte (14) gemäß jeder der periodischen Elementarbewegungen algebraisch unabhängig voneinander sind.

2. Vorrichtung (10, 40) nach Anspruch 1, wobei das Verhältnis zwischen der Periode des Plateaus und der größten der Elementarperioden kleiner gleich 10 ist.

3. Vorrichtung (10) nach einem der Ansprüche 1 oder 2, wobei die sechs Stützen Pleuelstangen (16) sind; und
die Betätigungsvorrichtung eine Antriebsvorrichtung (20, 30) umfasst, die die gesteuerten Stützen mechanisch verbindet, wobei die Antriebsvorrichtung (20, 30) von einem einzigen Aktuator (21) gesteuert ist.

4. Vorrichtung (10) nach Anspruch 3, wobei die Antriebsvorrichtung (20) umfasst:
ein zentrales Zahnrad (23), das dazu ausgebildet ist, durch den Aktuator (21) in Drehung versetzt zu werden, und
wenigstens drei periphere Zahnräder (24), die mit dem zentralen Zahnrad (23) in Eingriff stehen, und
wobei die wenigstens drei gesteuerten Stützen (16) mit ihrem unteren Ende (18) jeweils exzentrisch mit jedem der wenigstens drei peripheren Zahnräder (24) verbunden sind.

5. Vorrichtung (10) nach Anspruch 3, wobei die Antriebsvorrichtung (30) umfasst:
ein zentrales Zahnrad (32), das dazu ausgebildet ist, durch den Aktuator (21) gedreht zu werden,
drei Zwischenzahnräder (34), die mit dem zentralen Zahnrad (32) in Eingriff stehen,
sechs periphere Zahnräder (36), die in Zweiergruppen (35) mit jedem der drei Zwischenzahnräder (34) in Eingriff stehen,
wobei die wenigstens drei gesteuerten Stützen (16) sechs gesteuerte Stützen sind, und
die sechs gesteuerten Stützen (16) mit ihrem unteren Ende (18) jeweils exzentrisch mit jedem der genannten peripheren Zahnräder (24) verbunden sind.

6. Vorrichtung (10) nach Anspruch 4 oder 5, wobei die sechs peripheren Zahnräder (24, 36) in Paaren mit gleichen Durchmessern (24a, 24b, 24c; 36a, 36b, 36c) gruppiert sind, wobei die Durchmesser der peripheren Zahnräder jedes Paares (24a, 24b, 24c; 36a, 36b, 36c) von einem Paar zum anderen unterschiedlich sind.

7. Vorrichtung (10) nach Anspruch 6, wobei die peripheren Zahnräder gleichen Durchmessers (24a, 24b, 24c; 36a, 36b, 36c) jeweils ein Zentrum aufweisen,
wobei die Zentren die Eckpunkte eines Sechsecks bilden, und
die peripheren Zahnräder gleichen Durchmessers (24a, 24b, 24c; 36a, 36b, 36c) an gegenüberliegenden Eckpunkten des Sechsecks, das sie bilden, angeordnet sind.

8. Vorrichtung (10) nach Anspruch 6 oder 7, wobei die Durchmesser der Paare von peripheren Zahnrädern (24a, 24b, 24c; 36a, 36b, 36c) gleichen Durchmessers paarweise proportional zu drei Primzahlen unter ihnen sind.

9. Vorrichtung (10) nach Anspruch 8, wobei die Durchmesser der drei Paare von peripheren Zahnrädern (24a, 24b, 24c; 36a, 36b, 36c) gleichen Durchmessers paarweise jeweils proportional zu 4, 5 und 6 oder zu 10, 12 und 15 sind.

10. Vorrichtung (10) nach einem der Ansprüche 6 bis 9, wobei die mit peripheren Zahnrädern eines gleichen Paares gleichen Durchmessers (24a, 24b, 24c; 36a, 36b, 36c) verbundenen Pleuelstangen (16) gegenphasig sind.

11. Vorrichtung (10, 40) nach einem der Ansprüche 1 bis 10, ferner umfassend:
wenigstens drei Längskraftsensoren (19, 49), die mit wenigstens drei der sechs Stützen (16) verbunden sind, und
eine Zentraleinheit (22, 48), die mit der Betätigungsvorrichtung und mit den wenigstens drei Längskraftsensoren (19, 49) verbunden ist, wobei die Zentraleinheit (22, 48) dazu ausgebildet ist, Kraftinformationen von den wenigstens drei Längskraftsensoren (19, 49) zu erfassen.

12. Vorrichtung (10, 40) nach Anspruch 11 in Kombination mit einem der Ansprüche 3 bis 9, ferner umfassend einen Positionssensor (51), der dazu ausgebildet ist, den Lauf des zentralen Zahnrads (23, 32) durch wenigstens drei vordefinierte Positionen zu erfassen, wobei der Positionssensor (51) mit der Zentraleinheit (22) kommuniziert, um daraus eine Geschwindigkeit des zentralen Zahnrads (23, 32) beim Lauf durch jede der wenigstens drei vordefinierten Positionen abzuleiten.

13. Verfahren (60) zum Bewegen eines Objekts (15, 45) unter Verwendung der Vorrichtung (10, 40) nach einem der Ansprüche 1 bis 12, und ferner umfassend:
- Antreiben der Vorrichtung (10, 40) durch die Betätigungsvorrichtung, um der Platte (14, 44) die periodische Bewegung gemäß den wenigstens drei Freiheitsgraden aufzuzwingen.

14. Verfahren (60) nach Anspruch 13 unter Verwendung der Vorrichtung (10, 40) nach einem der Ansprüche 11 und 12, wobei der Schritt des Antreibens der Vorrichtung (10, 40) umfasst:
- Antreiben der Vorrichtung (10, 40) durch die Betätigungsvorrichtung, um jede eines vordefinierten Satzes von Positionen der Platte (14, 44) mit wenigstens einer ersten Geschwindigkeit und einer zweiten Geschwindigkeit zu durchlaufen, wodurch wenigstens ein erster und ein zweiter Messzyklus von Messungen durchgeführt wird, wobei der vordefinierte Satz von Positionen wenigstens drei Positionen umfasst, für die die momentanen Bewegungen der Platte an diesen Positionen algebraisch unabhängig voneinander sind;
- Erfassen der Kraftinformationen durch die Zentraleinheit (22, 48) für jede Position des vordefinierten Satzes von Positionen der Platte (14, 44) während des Antriebs mit der wenigstens ersten und zweiten Geschwindigkeit; und
- Bestimmen wenigstens eines Trägheitsmerkmals aus den Bewegungen der Platte (14, 44) und den diesen Bewegungen entsprechenden Kraftinformationen durch die Zentraleinheit (22, 48).

15. Verfahren (60) nach Anspruch 14 in Kombination mit der Vorrichtung nach Anspruch 12, wobei die Zentraleinheit (22) für jede der wenigstens ersten und zweiten Geschwindigkeit für jeden vordefinierten Satz von Positionen der Platte (14) Daten des Positionssensors (51) des zentralen Zahnrads (23, 32) erfasst, und die Zentraleinheit (22) die Daten des Positionssensors (51) mittelt, um daraus eine durchschnittliche tatsächliche Geschwindigkeit des zentralen Zahnrads (23, 32) für jeden der ersten und zweiten Messzyklen abzuleiten.

16. Verfahren (60) nach einem der Ansprüche 14 und 15, wobei der Schritt des Bestimmens wenigstens eines Trägheitsmerkmals der Daten eine Extraktion mittels Fourier-Filter eines Mittelwerts und der Komponenten jeder Leistung auf den Grundfrequenzen der periodischen Elementarbewegungen für jeden der ersten und zweiten Messzyklen umfasst.

## Claims

1. A device (10, 40) for moving an object (15, 45), the device (10, 40) comprising:
a base (12, 42) and a platform (14, 44) able to receive the object (15);
six supports (16, 46) each having an upper end (17) connected to the platform (14, 44) and a lower end (18) connected to the base (23, 42), where the upper end (17) and lower end (18) of each support (16, 46) in combination have at least five degrees of freedom; and
an actuation device connected to at least three of the supports (16, 46), where the actuation device is suited for giving predefined periodic movements to said at least three of the six supports (16), these three supports (16) being called controlled supports, thus giving a periodic movement to the platform (14) relative to the base (12) with at least three degrees of freedom, **characterized in that** said periodic movement is composed of at least three elementary periodic movements each defining a degree of freedom of the movement of the platform, where each of said three periodic elementary movements has a period, called elementary period, different from each other, where the elementary periods are submultiples of the period of the periodic movement of the platform (14), and the movements of the platform (14) along each other periodic elementary movements are algebraically independent from each other.

2. The device (10, 40) according to claim 1, wherein the ratio between the period of the platform and the largest of the elementary periods is less than or equal to 10.

3. The device (10) according to any one of claims 1 or 2, wherein the six supports are connecting rods (16); and
the actuation device comprises a drive device (20, 30) mechanically connecting said controlled supports, where the drive device (20, 30) is controlled by a single actuator (21).

4. The device (10) according to claim 3 wherein the drive device (20) includes:
a central toothed gear (23) rotatable by the actuator (21); and
at least three peripheral toothed gears (24) meshed with the central toothed gear (23), and
said at least three controlled supports (16) have the lower end (18) thereof connected respectively and eccentrically the each of said at least three peripheral toothed gears (24).

5. The device (10) according to claim 3 wherein the drive device (30) includes:
a central toothed gear (32) rotatable by the actuator (21);
three intermediate toothed gears (34) meshed with the central toothed gear (32); and
six peripheral toothed gears (36) meshed by pairs (35 on each of the three intermediate toothed gears (34); where
said at least three controlled supports (16) are six controlled supports; and
the six controlled supports (16) have the lower end (18) thereof connected eccentrically to each of said respective peripheral toothed gears (24).

6. The device (10) according to claim 4 or 5, wherein the six peripheral toothed gears (24, 36) are grouped by same diameter pairs (24a, 24b, 24c; 36a, 36b, 36c), where the diameters of the peripheral toothed gears of each pair (24a, 24b, 24c; 36a, 36b, 36c) are different from one pair to the next.

7. The device (10) according to claim 6, wherein the same diameter peripheral toothed gears (24a, 24b, 24c; 36a, 36b, 36c) each have one center;
the centers form the vertices of a hexagon; and
the same diameter peripheral toothed gears (24a, 24b, 24c; 36a, 36b, 36c) are arranged along opposite vertices of the hexagon that they form.

8. The device (10) according to claim 6 or 7, wherein the side-by-side diameters of the pairs of same diameter peripheral toothed gears (24a, 24b, 24c; 36a, 36b, 36c) are proportional to three mutually prime integers.

9. The device (10) according to claim 8, wherein the side-by-side diameters of same diameter peripheral toothed gears (24a, 24b, 24c; 36a, 36b, 36c) are respectively proportional to 4, 5 and 6, or to 10, 12 and 15.

10. The device (10) according to one of claims 6 to 9, wherein the connecting rods (16) connected to the peripheral toothed gears of a single same diameter pair (24a, 24b, 24c; 36a, 36b, 36c) have opposite phase.

11. The device (10, 40) according to any one of claims 1 to 10, further comprising:
at least three longitudinal force sensors (19, 49) associated with at least three of the six supports (16); and
one central unit (22, 48) connected to the actuation device and to the at least three longitudinal force sensors (19, 49), where the central unit (22, 48) is suited to collect force information from said at least three longitudinal force sensors (19, 49).

12. The device (10, 40) according to claim 11 in combination with any one of claims 3 to 9, further comprising a position sensor (51) suited for detecting the passage of the central toothed gear (23, 32) through at least three preset positions, where said position sensor (51) communicates with the central unit (22) for deducing from it a speed of the central toothed gear (23, 32) upon going by each of said at least three preset positions.

13. A method (60) for moving an object (15, 45) using the device (10, 40) according to one of claims 1 to 12, and further comprising:
- driving the device (10, 40) by said actuation device in a way to give a periodic movement to the platform (14, 44) with said at least three degrees of freedom.

14. The method (60) according to claim 13 using the device (10, 40) according to any one of claims 11 and 12, wherein the step of driving the device (10, 40) comprises:
- driving the device (10, 40) by said actuator device in order to go by each position of a predefined set of positions of the platform (14, 44) with at least a first speed and a second speed, thus executing at least one first and one second measurement cycle, where the predefined set of positions comprises at least three positions for which the instantaneous movements of the platform in these positions are mutually algebraically independent;
- collecting the force information for each position of the predefined set of positions of the platform (14, 44) during driving with said at least first speed and second speed by the central unit (22, 48); and
- determining at least one inertial property by the central unit (22, 48) with the movements of the platform (14, 44) and the force information corresponding to these movements.

15. The method (60) according to claim 14 in combination with the device according to claim 12, wherein, for each of said at least first and second speeds, the central unit (22) collects data from the position sensor (51) of the central toothed gear (23, 32) for each position in the predefined set of positions of the platform (14), and the central unit (22) averages data from the position sensor (51) in order to deduce from it a real average speed of the central toothed gear (23, 32) for each of said at least first and second measurement cycles.

16. The method (60) according to one of claims 14 and 15, wherein the step of determining the at least one inertial property from the data comprises an extraction of one average value and of components of each force by Fourier filter over the fundamental frequencies of the periodic elementary movements for each of said at least one first and second measurement cycles.
